# EUROPÄISCHE PATENTSCHRIFT

(11) **EP 2 559 976 B1**
(45) Veröffentlichungstag und Bekanntmachung des Hinweises auf die Patenterteilung: **14.02.2018**
(21) Anmeldenummer: 12002044.1
(22) Anmeldetag: 22.03.2012
(51) Int. Cl.: G01F 15/14, G01F 1/84

(54) **Coriolis-Massedurchflussmessgerät**
Coriolis mass flow measuring device
Débitmètre massique Coriolis

(30) Priorität: 30.09.2011 DE 102011114569; 16.08.2011 DE 102011110165
(43) Veröffentlichungstag der Anmeldung: 20.02.2013
(73) Patentinhaber: Krohne AG, 4019 Basel (CH)
(72) Erfinder: Hussain, Yousif, Weston Favell Northampton, NN 33 DA (GB); Wang, Tao, Rough Common Canterbury, Kent, CT2 9DG (GB)
(74) Vertreter: Gesthuysen, Michael

(56) Entgegenhaltungen:
- DE-U1- 29 511 888
- US-A- 5 501 106
- US-A- 5 996 225
- US-A1- 2011 094 312

## Beschreibung

Die Erfindung betrifft ein Coriolis-Massedurchflussmessgerät mit einem von einem Medium durchströmbaren Messrohr, mit mindestens einem Aktuator und mit mindestens einem Sensor, wobei das Messrohr zwischen seinem Einlassende und seinem Auslassende zu einer ersten Windung und zu einer zweiten Windung gebogen ist, die erste Windung und die zweite Windung in einem Übergangsbereich des Messrohrs ineinander übergehen, die erste Windung und die zweite Windung in parallelen Windungsebenen verlaufen und sich gegenüberstehen und wobei die erste Windung und die zweite Windung in schwingfähigen Bereichen von dem Aktor zu Schwingungen anregbar sind und die Schwingungen von dem Sensor erfassbar sind.

Coriolis-Massedurchflussmessgeräte sind seit vielen Jahren in ganz unterschiedlichen Ausgestaltungen bekannt. Bei Massedurchflussmessgeräten, die auf dem Coriolis-Prinzip beruhen, wird das von einem Medium durchströmbare Messrohr oder die von einem Medium durchströmbaren Messrohre durch den Aktor zu einer Schwingung angeregt, die vorzugsweise einer Eigenfrequenz des Messrohrs in der Einbauposition entspricht. Ein- und auslaufseitig wirken sich Trägheitskräfte unterschiedlich auf das strömende Medium in dem zu Schwingungen angeregten Messrohr und damit auf das Messrohr selbst aus, so dass die Auslenkung des Messrohrs ein- und auslaufseitig unterschiedlich beeinflusst wird. Meist sind zwei Sensoren zur Erfassung der Schwingungen vorgesehen, nämlich ein- und auslaufseitig beabstandet von dem Aktor, so dass insgesamt die ein- und auslaufseitig mit den Sensoren erfassten Schwingungen des Messrohres eine Phasenverschiebung aufweisen, die ein unmittelbares Maß für den interessierenden Massedurchfluss ist. Mittels einer Auswerteelektronik wird aus der Phasenverschiebung die Messgröße, nämlich der Massedurchfluss, abgeleitet.

Die Eingangs dargestellten Coriolis-Massedurchflussmessgeräte haben den Vorteil, dass sie nur mit einem einzigen Messrohr arbeiten, dieses Messrohr aber zu einer ersten Windung und einer zweiten Windung gebogen ist, die sich gegenüberstehen, also praktisch parallel zueinander verlaufen. Der zwischen der ersten Windung und der zweiten Windung wirkende Aktor lenkt die schwingfähigen Bereiche der ersten Windung und der zweiten Windung gegensinnig aus - also voneinander weg oder aufeinander zu-, so dass der Schwerpunkt des Systems insgesamt erhalten bleibt und von außen, also von den Anschlüssen her, Schwingungen praktisch nicht erkennbar sind. Dieser Vorteil wird bei anderen Coriolis-Massedurchflussmessgeräten, die mehr als ein Messrohr aufweisen und bei denen diese Messrohre entsprechend ausgelenkt werden, zwar auch erzielt, jedoch ist bei diesen mehrrohrigen Coriolis-Massedurchflussmessgeräten immer noch ein- und ausstromseitig ein Übergangsstück zwischen dem jeweils einen Prozessanschluss und den mehreren Messrohren erforderlich, die bei der Lösung mit einem zu parallelen Schleifen gewundenen Messrohr entfallen.

Wenn ein Coriolis-Massedurchflussmessgerät in ein Rohrleitungssystem eingebaut wird, werden zwangsläufig externe Schwingungen - sofern vorhanden - auf das Messgerät übertragen, die das Messergebnis dann negativ beeinflussen können, weil das Messergebnis selbst direkt auf den durch die Sensoren erfassten Schwingungen beruht.

Insbesondere bei kleinen Coriolis-Massedurchflussmessgeräten, die zur Messung von sehr geringen Durchflussmengen vorgesehen sind, ist ein solches Einkoppeln von externen Schwingungen problematisch.

Der Erfindung liegt daher die Aufgabe zugrunde, ein - insbesondere für die Messung von sehr kleinen Durchflussmengen geeignetes - Coriolis-Massedurchflussmessgerät anzugeben, das gegen die Einkopplung von Externen Schwingungen unempfindlicher ist.

Die zuvor hergeleitete und aufgezeigte Aufgabe ist bei einem gattungsgemäßen Coriolis-Massedurchflussmessgerät dadurch gelöst, dass die schwingfähigen Bereiche der ersten Windung und der zweiten Windung V-förmig gebogen sind und sich jeweils in Richtung auf den Übergangsbereich des Messrohrs öffnen. Damit ist gemeint, dass die Schenkel der V-förmig gebogenen ersten Windung und zweiten Windung in Richtung auf den Übergangsbereich auseinander laufen, der Punkt oder der Bereich, an dem die Schenkel zusammenkommen, in dem sie zusammenlaufen, also entfernt von dem Übergangsbereich ist.

Es hat sich herausgestellt, dass bei dieser besonderen Ausgestaltung der ersten Windung und der zweiten Windung des Messrohrs bei gleichen maximalen Abmessungen der schwingfähigen Bereiche der Windungen deutlich höhere kleinste Schwingungsfrequenzen erzielt werden können, als bei anders ausgeformten schwingfähigen Bereichen der ersten Windung und der zweiten Windung. Insbesondere können höhere kleinste Schwingungsfrequenzen erzielt werden als beispielsweise bei kreis- oder Ω-förmigen schwingfähigen Bereichen. Eine höhere Arbeitsfrequenz ist deshalb vorteilhaft, weil sich hier - zumeist niederfrequentere - Störschwingungen aus angeschlossenen Anlagenteilen nicht unmittelbar auf das Messergebnis auswirken, da sie nicht direkt in das Messgerät einkoppeln.

Bei bevorzugten Ausgestaltungen des erfindungsgemäßen Coriolis-Massedurchflussmessgeräts für sehr kleine Durchflussmengen werden Messrohre mit einem Innendurchmesser von beispielsweise 1,2 mm verwendet und mit einer Wandstärke von 0,2 mm. Die Höhe des schwingfähigen Bereichs eines erfindungsgemäß ausgestalteten Messrohres mit V-förmig gebogenen Windungen und mit sich in Richtung auf den Übergangsbereich des Messrohrs öffnenden V-Schenkeln beträgt dann beispielsweise 60 mm, wobei die offenen Enden der V-Schenkel dann etwa 100 mm voneinander entfernt sind. Bei einem derart ausgestalteten Messrohr lassen sich kleinste Eigenfrequenzen von über 100 Hz und sogar über 150 Hz erzielen.

Bei einer besonders bevorzugten Ausgestaltung des erfindungsgemäßen Coriolis-Massedurchflussmessgeräts ist vorgesehen, dass der Übergangsbereich des Messrohrs in einer Basisebene liegt, insbesondere der Übergangsbereich zusammen mit dem Einlassende und dem Auslassende des Messrohres in einer Basisebene liegt. Diese Ausgestaltung hat den Vorteil, dass jedenfalls die nicht unmittelbar mit den schwingfähigen Bereichen in Zusammenhang stehenden Bereiche der ersten Windung und der zweiten Windung nicht verstreut im Raum und damit im Coriolis-Massedurchflussmessgerät liegen. Vielmehr liegt eine gewisse Grundordnung vor und es wird damit eine Trennbarkeit zwischen den schwingfähigen Bereichen der ersten Windung und der zweiten Windung, die mit der Generierung des eigentlich interessierenden Nutzsignals in direktem Zusammenhang stehen, und dem Übergangsbereich und gegebenenfalls dem Einlassende und dem Auslassende des Messrohrs, die nicht in unmittelbarem Zusammenhang mit dem das Nutzsignal erzeugenden Strukturen stehen, erreicht.

Die zuvor beschriebene Trennung zwischen den schwingfähigen Bereichen der ersten Windung und der zweiten Windung einerseits, und dem Übergangsbereich und gegebenenfalls dem Einlassende und dem Auslassende des Messrohrs andererseits, wird in einer bevorzugten Ausgestaltung weiterverbessert, indem die Windungsebenen senkrecht auf der Basisebene stehen, so dass eine maximale Entfernung der vorgenannten Bereiche gewährleistet wird.

Vorzugsweise schließen die Schenkel des V-förmig gebogenen schwingfähigen Bereichs der ersten Windung und/oder der zweiten Windung identische Winkel mit der Basisebene eine, so dass der V-förmig gebogene schwingfähige Bereich sich symmetrisch über den Übergangsbereich des Messrohrs erstreckt, wobei die Schenkel mit zunehmender Entfernung von dem Übergangsbereich langsam aufeinander zulaufen, im Gegensatz zu Ω-förmig gebogenen Messrohren, bei denen die Ω-Schenkel praktisch zentral dem Übergangsbereich entspringen würden und mit zunehmender Entfernung vom Übergangsbereich zunächst auseinander laufen würden um dann letztlich wieder zu einer geschlossenen Windung zusammen zu laufen.

Wenn davon die Rede ist, dass die schwingfähigen Bereiche der ersten Windung und der zweiten Windung V-förmig gebogen sind, dann ist damit im Wesentlichen gemeint, dass die Schenkel des in diesem Bereich V-förmig gebogenen Messrohres an einem Ende aufeinander zulaufen und am anderen Ende auseinander laufen. Weniger entscheidend ist, mit welchem Krümmungsradius der V-förmige Bereich am geschlossenen Ende des "V" geschlossen ist. Selbstverständlich endet das Messrohr nicht an den offenen Enden der V-Schenkel des Messrohres, jedoch endet dort der schwingfähige Bereich der durch das gebogene Messrohr gebildeten ersten Windung bzw. der zweiten Windung, beispielsweise indem die Schwingung des Messrohres an diesen Stellen durch eine Knotenplatte definiert eingegrenzt bzw. verhindert wird.

Die Ausbreitung von Störschwingungen lässt sich bei einer weiteren bevorzugten Ausgestaltung dadurch weiter reduzieren, dass das Messrohr im Übergangsbereich zwischen der ersten Windung und der zweiten Windung mit einer zentralen Masse versehen ist und/oder das Messrohr im Übergangsbereich mit einem Gehäuse des Coriolis-Massedurchflussmessgeräts fest verbunden ist. Idealerweise werden beide Maßnahmen ergriffen, also das Messrohr im Übergangsbereich sowohl mit einer zentralen Masse fest verbunden, wobei diese zentrale Masse zusätzlich mit dem Gehäuse des Coriolis-Massedurchflussmessgeräts fest verbunden wird. Dadurch wird sehr effektiv verhindert, dass sich die Schwingung der ersten Windung und der zweiten Windung auf eine Weise beeinflussen, die nicht durch die Wirkung von Trägheitskräften in der jeweiligen Windung verursacht wird, die also nicht direkt in dem Messprinzip selbst begründet ist. Dadurch kann insgesamt eine höhere Präzision bei der mit dem erfindungsgemäßen Coriolis-Massedurchflussmessgerät durchgeführten Messung bewirkt werden.

Hinsichtlich der Unterdrückung von Störschwingungen ist bei weiteren vorteilhaften Ausgestaltungen der Erfindung von besonderer Bedeutung die Ausstattung des Messrohrs im Einlassbereich mit einer Einlassbereichsmasse und/oder die Ausstattung des Messrohrs im Auslassbereich mit einer Auslassbereichsmasse. Alternativ kann das Messrohr im Einlassbereich mit einem Gehäuse des Coriolis-Massedurchflussmessgeräts fest verbunden werden und/oder kann das Messrohr im Auslassbereich mit einem Gehäuse des Coriolis-Massedurchflussmessgeräts fest verbunden sein, vorzugsweise wird jedoch im Einlassbereich und/oder im Auslassbereich eine Masse vorgesehen, die zusätzlich mit dem Gehäuse des Coriolis-Massedurchflussmessgeräts fest verbunden ist. Durch diese Maßnahme können über die angeschlossenen externen Prozessrohre herangeführte Schwingungen effektiv abgefangen werden. Auch ist es möglich, die Massen im Einlassbereich, im Auslassbereich und im Übergangsbereich zusammenzufassen zu einer tragenden und entkoppeinden Gesamtmasse.

Im Einzelnen gibt es nun eine Vielzahl von Möglichkeiten, das erfindungsgemäße Coriolis-Massedurchflussmessgerät auszugestalten und weiterzubilden. Dazu wird verwiesen auf die dem Patentanspruch 1 nachgeordneten Patentansprüche und die nachfolgende Beschreibung von bevorzugten Ausführungsbeispielen in Verbindung mit der Zeichnung. In der Zeichnung zeigen:
- Fig. 1a - 1d: ein erstes Ausführungsbeispiel eines erfindungsgemäßen Coriolis-Massedurchflussmessgeräts mit senkrecht zu den Windungsebenen verlaufendem Einlassende und Auslassende mit Variationen in der Realisierung von Massen im Einlassbereich, Auslassbereich und im Übergangsbereich des Messrohrs,
- Fig. 2a - 2b: das Ausführungsbeispiel ähnlich Fig. 1 mit im Wesentlichen parallel zu den Windungsebenen verlaufendem Einlassende und Auslassende des Messrohrs und
- Fig. 3a - 3b: ein weiteres Ausführungsbeispiel eines erfindungsgemäßen Coriolis-Massedurchflussmessgeräts mit einer gegenüber den Fig. 1 und 2 veränderter Ausgestaltung des Übergangsbereichs des Messrohres.

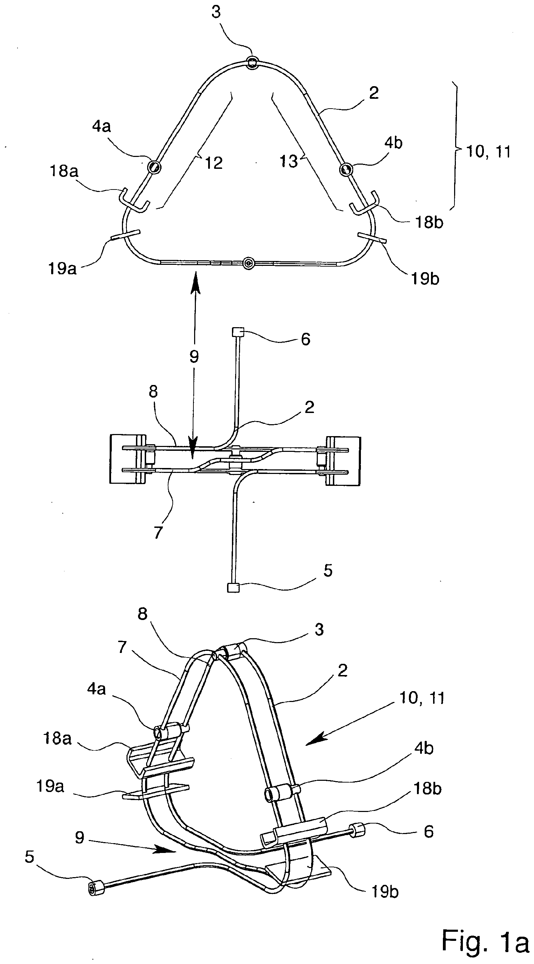

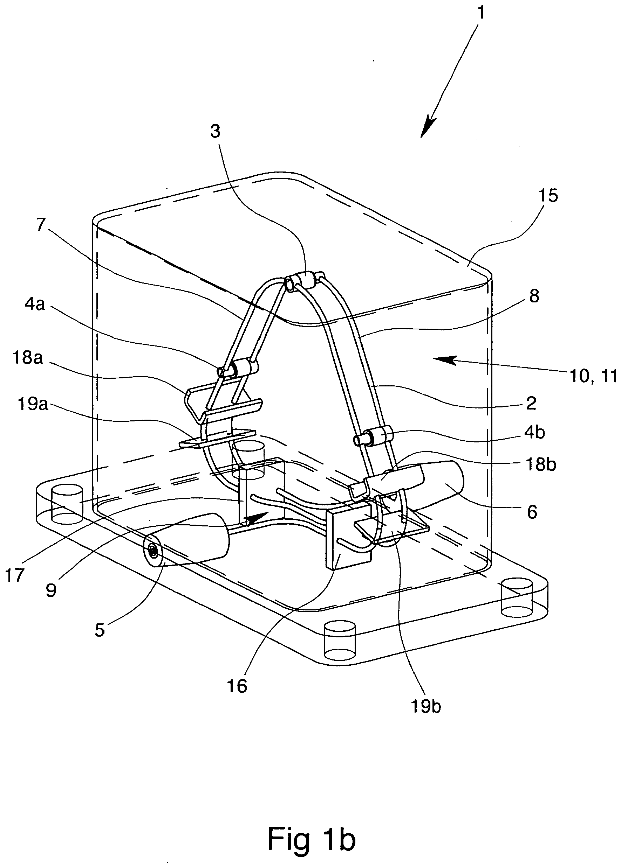

In den Fig. 1b-1d, 2b und 3b sind jeweils erfindungsgemäße Coriolis-Massedurchflussmessgeräte 1 dargestellt, die ein von einem Medium durchströmbares Messrohr 2 aufweisen, wobei die Ausgestaltung und der Verlauf des Messrohrs 2 vorliegend von besonderem Interesse ist. Aus diesem Grund ist in den Fig. 1a, 2a und 3a jeweils im Wesentlichen nur das Messrohr 2 und relevante Anbauteile dargestellt. Zu diesen Anbauteilen gehören unter anderem ein Aktuator 3 und vorliegend zwei Sensoren 4a, 4b, die der Erfassung der Schwingungen des Messrohres 2 dienen.

Die dargestellten Coriolis-Massedurchflussmessgeräte 1 zeichnen sich dadurch aus, dass sie über lediglich ein einziges Messrohr 2 verfügen, das jeweils zwischen seinem Einlassende 5 und seinem Auslassende 6 zu einer ersten Windung 7 und zu einer zweiten Windung 8 gebogen ist. Da lediglich ein einziges Messrohr 2 vorliegt, sind die erste Windung 7 und die zweite Windung 8 in einem Übergangsbereich 9 des Messrohrs 2 miteinander verbunden bzw. gehen die erste Windung 7 und die zweite Windung 8 in diesem Übergangsbereich 9 ineinander über. Die erste Windung 7 und die zweite Windung 8 verlaufen in parallelen Windungsebenen, was insbesondere in den Aufsichten gut zu erkennen ist in den Fig. 1a, 2a und 3a (jeweils mittlere Abbildung).

Die erste Windung 7 und die zweite Windung 8 stehen sich insgesamt gegenüber, sind also auf kürzestem Weg zueinander benachbart, mit anderen Worten sind die erste Windung 7 und die zweite Windung 8 in Blickrichtung senkrecht zu den parallelen Windungsebenen im Wesentlichen kongruent zueinander, wozu insbesondere verwiesen wird auf die Seitenansichten (jeweils oberste Darstellung) in den Fig. 1a, 2a und 3a.

In den schwingfähigen Bereichen 10, 11 der ersten Windung 7 und der zweiten Windung 8 ist besonders konstruktiv darauf geachtet worden, dass der Aktor 3 die erste Windung 7 und die zweite Windung 8 zur Erzielung eines Nutzsignals durch die Sensoren 4a und 4b zu gut ausgebildeten Schwingungen anregen kann. In den anderen Bereichen des Messrohrs 2, die im Wesentlichen benachbart sind zu dem Einlassende 5 und dem Auslassende 6 des Messrohrs 2, sind derartige Schwingungen nicht erwünscht, da sie hier nicht zur Erzielung eines für die Messung erforderlichen Nutzsignals dienen, sondern vielmehr sich nur störend auf die Messung auswirken können, wenn sie beispielsweise von dem angeschlossenen - und hier im Einzelnen nicht dargestellten - Prozessleitungssystem übertragen und in das Coriolis-Massedurchflussmessgerät 1 eingekoppelt werden.

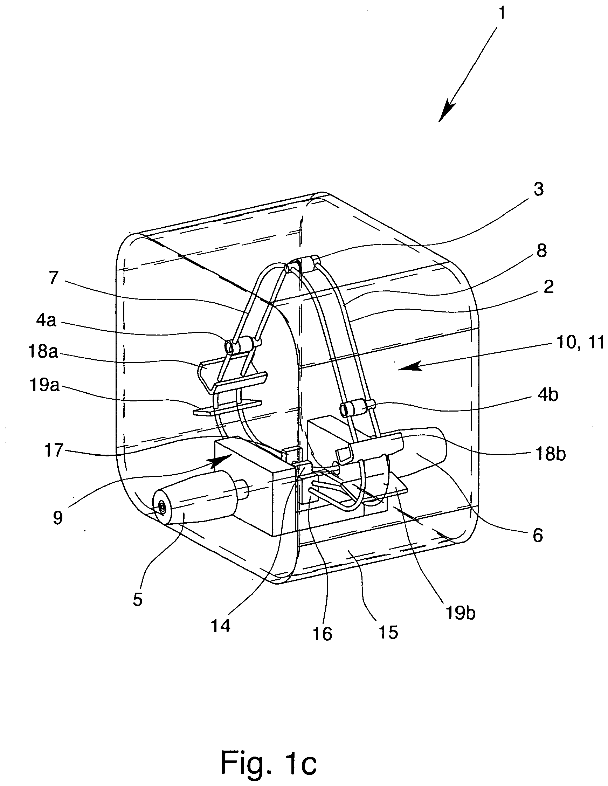

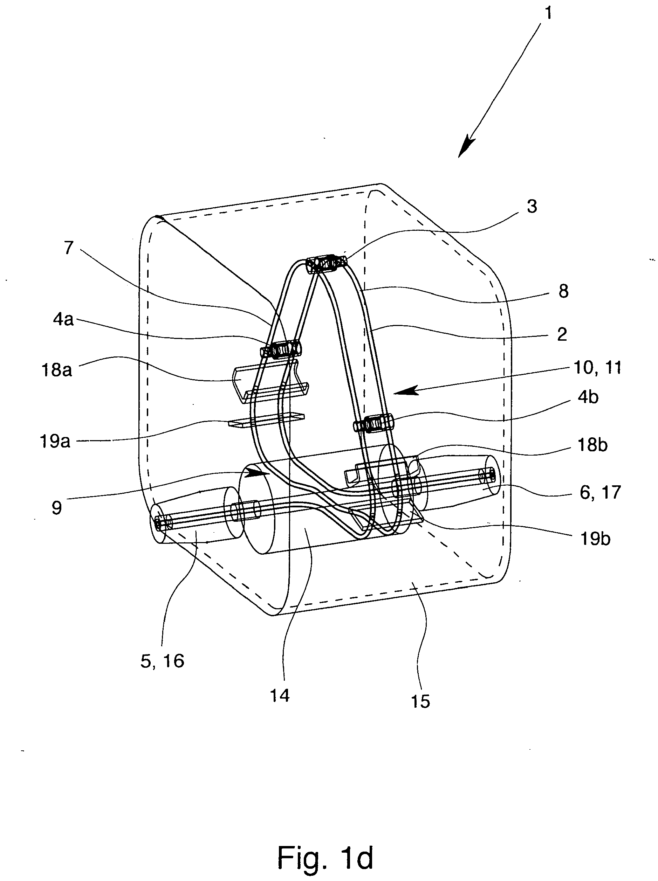

In allen Fig. 1 bis 3 ist ebenfalls die besondere Form der schwingfähigen Bereiche 10, 11 der ersten Windung 7 und der zweiten Windung 8 erkennbar, die sich dadurch ergibt, dass diese schwingfähigen Bereiche 10, 11 V-förmig gebogen sind und sich jeweils in Richtung auf den Übergangsbereich 9 des Messrohres 2 öffnen, was von besonderer Bedeutung ist. Der Vorteil des V-förmig gebogenen Messrohrs in den zwei schwingfähigen Bereichen 10, 11 liegt darin, dass mit den so ausgestalteten Windungen 7, 8 höhere kleinste Eigenfrequenzen erzielt werden können als mit anders geformten Messrohren 2. Untersuchungen haben ergeben, dass beispielsweise Ω-förmige oder kreisförmig ausgestaltete Windungen in den schwingfähigen Bereichen bei ansonsten gleichartigen Messrohreigenschaften niedrigere Eigenfrequenzen aufweisen, was insbesondere bei der unerwünschten Einkopplung von externen Schwingungen nachteilig ist. Gleiches gilt für genau umgekehrt V-förmig ausgestaltete schwingfähige Bereiche, bei denen sich die schwingfähigen Bereiche 10, 11 der ersten Windung 7 und der zweiten Windung 8 V-förmig gebogen sind und jeweils in Richtung auf den Übergangsbereich 9 des Messrohrs 2 zusammenlaufen, sich also bei zunehmende Entfernung von dem Übergangsbereich 9 des Messrohres öffnen (ähnlich der Ω-Form).

Die dargestellten Ausführungsbeispiele haben ferner gemeinsam, dass der Übergangsbereich 9 des Messrohrs 2 in einer Basisebene liegt, das Messrohr 2 in dem Übergangsbereich 9 also in einer Ebene verläuft und nicht räumlich in seinem Verlauf erstreckt ist. Darüber hinaus liegen auch das Einlassende 5 und das Auslassende 6 in den dargestellten Varianten in der gleichen Basisebene. Durch diese gewollte Konzentration jener Bereiche des Messrohrs 2, die nicht zu den schwingfähigen Bereichen 10, 11 der ersten Windung 7 und der zweiten Windung 8 gehören, lassen sich geometrisch auf eine Ebene konzentriert Maßnahmen ergreifen, um störende Schwingungen in diesen Teilen des Messrohrs 2 zu unterdrücken.

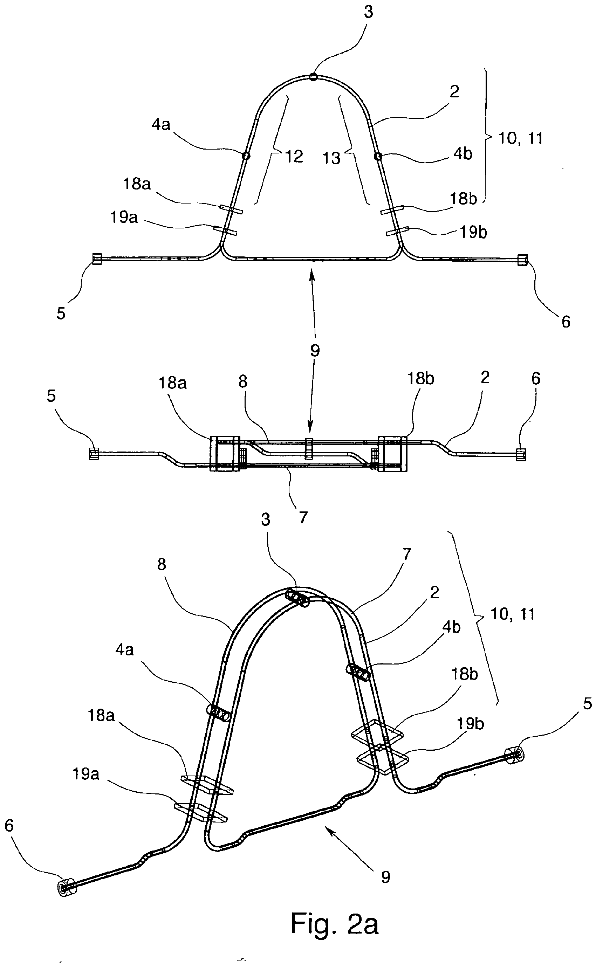

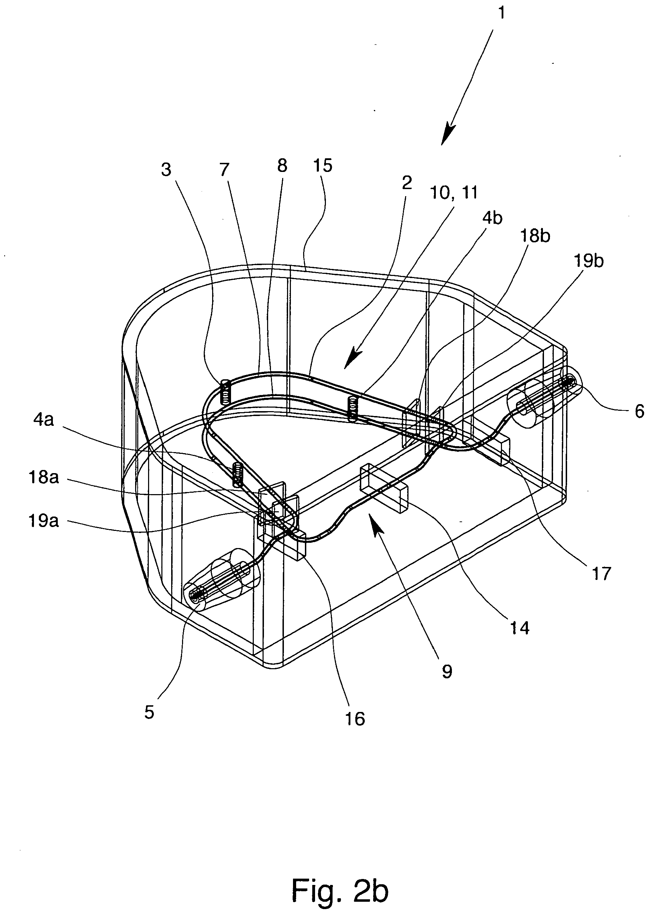

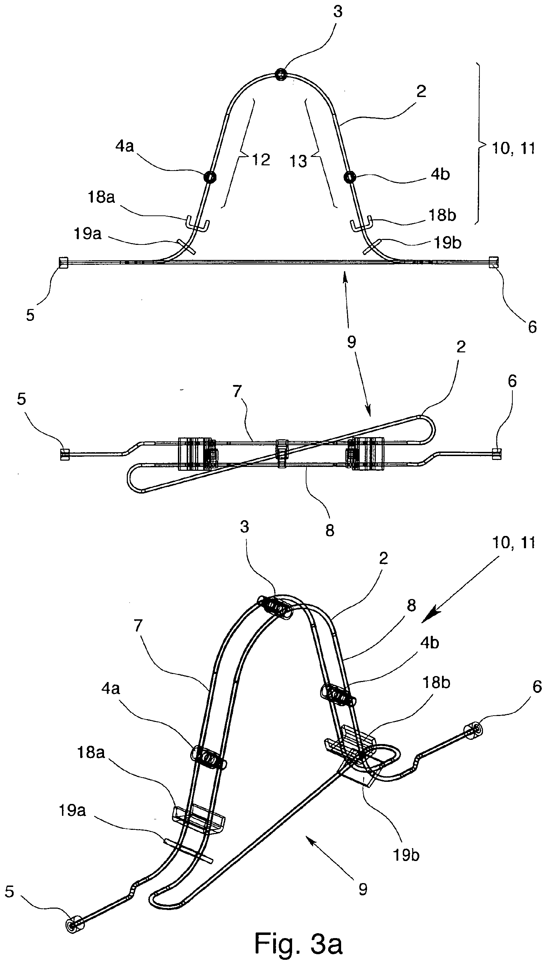

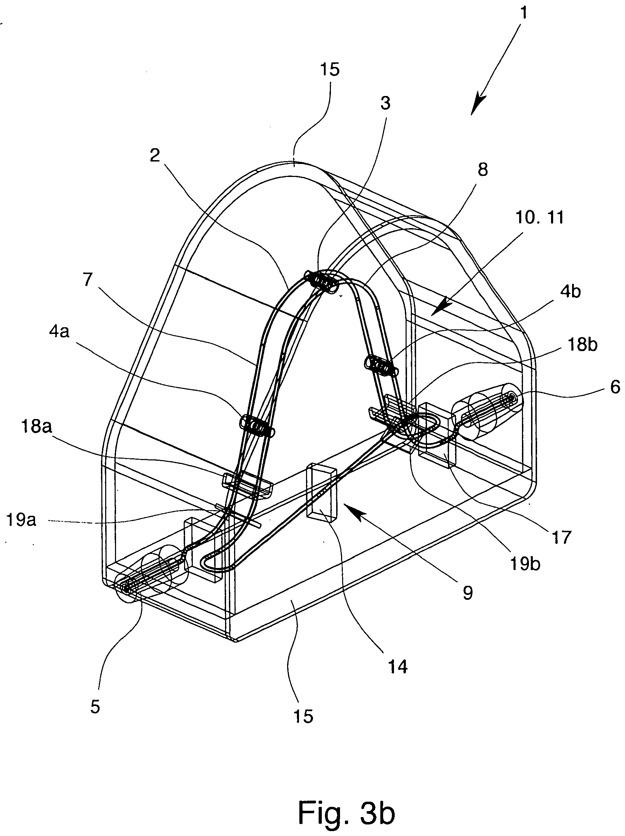

Eine solche geometrische Trennung von gewollt schwingfähigen Bereichen 10, 11 und denjenigen Bereichen des Messrohrs 2, die nach Möglichkeit keinerlei Schwingung ausführen oder weitergeben sollen, ist in den dargestellten Ausführungsbeispielen noch dadurch verbessert worden, dass die Windungsebenen der ersten Windung 7 und der zweiten Windung 8 praktisch senkrecht auf der Basisebene stehen, in der sich die Bereiche des Messrohrs 2 befinden, in denen eine Schwingung unerwünscht ist (siehe insbesondere die perspektivischen Darstellungen in den Figuren 1a (unten), 1b bis 1d; Fig. 2a (unten), Fig. 2b und Fig. 3a (unten) und Fig. 3b).

Den in den Figuren dargestellten Ausführungsbeispielen ist ebenfalls gemeinsam, dass sämtliche Schenkel 12, 13, die der Übersichtlichkeit halber nur in den obersten Teilfiguren der Fig. 1a, 2a und 3a dargestellt sind, der V-förmig gebogenen schwingfähigen Bereiche 10, 11 der ersten Windung 7 und der zweiten Windung 8 mit der Basisebene identische Winkel einschließen, wobei unter dem zwischen dem Schenkel 12, 13 und der Basisebene eingeschlossenen Winkel immer der kleinste Winkel zu der Basisebene verstanden wird. Insgesamt wird dadurch erreicht, dass sich die schwingfähigen Bereiche 10, 11 der ersten Windung 7 und der zweiten Windung 8 in den vorliegenden Fällen symmetrisch über der Basisebene erheben. Der Aktuator 3 ist jeweils mit demjenigen Bereich der ersten Windung 7 und der zweiten Windung 8 verbunden, in dem die Schenkel 12, 13 der jeweils V-förmig gebogenen schwingfähigen Bereiche 10, 11 zusammenlaufen, also in der Spitze der V-förmigen Bereiche.

Das in Fig. 3 dargestellte Ausführungsbeispiel unterscheidet sich von den anderen beiden Ausführungsbeispielen unter anderem darin, dass der Übergangsbereich 9 des Messrohrs 2 dort S-förmig ausgestaltet ist, wobei der Übergangsbereich 9 nicht nur zwischen den Windungsebenen verläuft, sondern diese Windungsebenen kreuzt und über den zwischen den Windungsebenen begrenzten Bereich hinausgeht (siehe insbesondere mittlere Darstellung in Fig. 3a).

Bei den Ausführungsbeispielen gemäß den Fig. 1c, 1d, 2b und 3b ist das Messrohr 2 im Übergangsbereich 9 mit einer zentralen Masse 14 versehen, wobei diese zentrale Masse 14 zusätzlich noch mit einem Gehäuse 15 des Coriolis-Massedurchflussmessgeräts 1 fest verbunden ist. Die Maßnahme dient der Unterdrückung von schwingungsmäßiger Wechselwirkung zwischen der ersten Windung 7 und der zweiten Windung 8 des Messrohres 2, da für die Durchflussbestimmung nur die Wirkung der Trägheitskräfte auf die jeweiligen Windungen 7 und 8 von Interesse sind, darüber hinausgehende andere Wechselwirkungen zwischen den Windungen 7 und 8 jedoch nicht erwünscht sind.

In den Fig. 1b, 1c, 1d, 2b und 3b ist ferner dargestellt, dass das Messrohr 2 im Einlassbereich mit einer zusätzlichen Einlassbereichsmasse 16 versehen ist, die zusätzlich mit dem Gehäuse 15 des Coriolis-Massedurchflussmessgeräts 1 fest verbunden ist. Genauso ist das Messrohr 2 im Auslassbereich mit einer Auslassbereichsmasse 17 versehen, die darüber hinaus ebenfalls mit dem Gehäuse 15 des Coriolis-Massedurchflussmessgeräts 1 fest verbunden ist. Auch diese Massen dienen dazu, unerwünschte Schwingungen des Messrohrs 2 zu verhindern, wobei sich die Einlassbereichsmasse 16 und die Auslassbereichsmasse 17 gegen die Einkopplung von externen und in das Coriolis-Massedurchflussmessgerät 1 eingekoppelte Schwingungen richten.

Bei den Ausführungsbeispielen gemäß den Fig. 1b und 3b ist eine weitere Maßnahme realisiert, um Störschwingungen des Übergangsbereichs 9 des Messrohrs 2 zu unterdrücken. Eine weitere Unterdrückung wird hier dadurch erreicht, dass ein einlassseitiges Ende des Übergangsbereichs 9 des Messrohrs 2 zusätzlich mit der Einlassbereichsmasse 16 - und über die Einlassbereichsmasse 16 mit dem Gehäuse 15 des Coriolis-Massedurchflussmessgeräts 1 - verbunden ist und ein auslassseitiges Ende des Übergangsbereichs 9 des Messrohrs 2 zusätzlich mit der Auslassbereichsmasse 17 - und darüber mit dem Gehäuse 15 des Coriolis-Massedurchflussmessgeräts 1 -verbunden ist.

In sämtlichen Ausführungsbeispielen wird der schwingfähige Bereich 10 der ersten Windung 7 und der schwingfähige Bereich 11 der zweiten Windung 8 durch zwei erste Knotenplatten 18a, 18b begrenzt, die an den beiden beabstandeten Enden der V-Schenkel 12, 13 des Messrohrs 2 angeordnet sind, wobei die ersten Knotenplatten 18a, 18b die erste Windung 7 und die zweite Windung 8 zusätzlich miteinander verbinden. Durch die zusätzliche Verbindung mit den Knotenplatten 18a, 18b können sich die erste Windung 7 und die zweite Windung 8 des Messrohrs 2 nicht mehr gegeneinander bewegen, so dass eine für die Messung relevante Schwingung des Messrohrs 2 an den ersten Knotenplatten 18a, 18b endet bzw. fort einen Schwingungsknoten ausbildet. Diese ersten Knotenplatten 18a, 18 b sind vorzugsweise noch U-förmig gebogen, um eine besondere Steifigkeit gegen ein Biegemoment aufzuweisen, das von der ersten Windung 7 und der zweiten Windung 8 des Messrohrs 2 in die Knotenplatten 18a, 18b eingeleitet wird.

Zur weiteren Verbesserung der Unterdrückung von Schwingungen über die ersten Knotenplatten 18a, 18b hinaus, sind in den dargestellten Ausführungsbeispielen zwei zweite Knotenplatten 19a, 19b an dem Messrohr 2 befestigt, eine zweite Knotenplatte 19a zwischen dem Einlassende 5 des Messrohrs 2 und der dem Einlassende 5 nahen ersten Knotenplatte 18a, eine weitere zweite Knotenplatte 19b zwischen dem Auslassende 6 des Messrohrs 2 und der dem Auslassende 6 des Messrohrs 2 nahen ersten Knotenplatte 18b, wobei die zweiten Knotenplatten 19a, 19b die erste Windung 7 und die zweite Windung 8 miteinander verbinden.

Die dargestellten Coriolis-Massedurchflussmessgeräte 1 sind durchweg für die Erfassung von geringsten Durchlässen gedacht. In den vorliegenden Fällen haben die erste Windung 7 und die zweite Windung 8 einen maximalen Windungsdurchmesser von unter 10 cm, wobei Messrohre 2 mit einem Innendurchmesser von 1,2 mm und einer Wandstärke von 0,2 mm zum Einsatz kommen.

## Patentansprüche

1. Coriolis-Massedurchflussmessgerät (1) mit einem von einem Medium durchströmbaren Messrohr (2), mit mindestens einem Aktuator (3) und mit mindestens einem Sensor (4a, 4b), wobei das Messrohr (2) zwischen seinem Einlassende (5) und seinem Auslassende (6) zu einer ersten Windung (7) und zu einer zweiten Windung (8) gebogen ist, die erste Windung (7) und die zweite Windung (8) in einem Übergangsbereich (9) des Messrohrs (2) ineinander übergehen, die erste Windung (7) und die zweite Windung (8) in parallelen Windungsebenen verlaufen und sich gegenüberstehen, wobei die erste Windung (7) und die zweite Windung (8) in schwingfähigen Bereichen (10, 11) von dem Aktor (3) zu Schwingungen anregbar sind und die Schwingunggen von dem Sensor (4a, 4b) erfassbar sind, und wobei die schwingfähigen Bereiche (10, 11) der ersten Windung (7) und der zweiten Windung (8) V-förmig gebogen sind,
**dadurch gekennzeichnet,**
**dass** die schwingfähigen Bereiche (10, 11) der ersten Windung (7) und der zweiten Windung (8) sich jeweils in Richtung auf den Übergangsbereich (9) des Messrohrs (2) öffnen.

2. Coriolis-Massedurchflussmessgerät (1) nach Anspruch 1, **dadurch gekennzeichnet, dass** der Übergangsbereich (9) des Messrohrs (2) in einer Basisebene liegt, insbesondere der Übergangsbereich (9), das Einlassende (5) und das Auslassende (6) des Messrohrs (2) in einer Basisebene liegen.

3. Coriolis-Massedurchflussmessgerät nach Anspruch 2, **dadurch gekennzeichnet, dass** die Windungsebenen senkrecht auf der Basisebene stehen.

4. Coriolis-Massedurchflussmessgerät (1) nach Anspruch 2 oder 3, **dadurch gekennzeichnet, dass** die Schenkel (12, 13) des V-förmig gebogenen schwingfähigen Bereichs (10) der ersten Windung (7) und/oder der zweiten Windung (8) identische Winkel mit der Basisebene einschließen, insbesondere jeder Schenkel (12, 13) der V-förmig gebogenen schwingfähigen Bereiche (10, 11) der ersten Windung (7) und der zweiten Windung (8) mit der Basisebene einen identischen Winkel einschließt.

5. Coriolis-Massedurchflussmessgerät (1) nach einem der Ansprüche 1 bis 4, **dadurch gekennzeichnet, dass** der Aktuator (3) mit dem Bereich der ersten Windung (7) und der zweiten Windung (8) verbunden ist, in dem die Schenkel (12, 13) der jeweils V-förmig gebogenen schwingfähigen Bereiche (10, 11) zusammenlaufen.

6. Coriolis-Massedurchflussmessgerät (1) nach einem der Ansprüche 1 bis 5, **dadurch gekennzeichnet, dass** der Übergangsbereich (9) des Messrohrs (2) S-förmig ausgestaltet ist, insbesondere in der Basisebene S-förmig ausgestaltet ist.

7. Coriolis-Massedurchflussmessgerät (1) nach einem der Ansprüche 1 bis 6, **dadurch gekennzeichnet, dass** das Messrohr (2) im Übergangsbereich (9) mit einer zentralen Masse (14) versehen ist und/oder das Messrohr (2) im Übergangsbereich (9) mit einem Gehäuse (15) des Coriolis-Massedurchflussmessgeräts (1) fest verbunden ist.

8. Coriolis-Massedurchflussmessgerät (1) nach einem der Ansprüche 1 bis 7, **dadurch gekennzeichnet, dass** das Messrohr (2) im Einlassbereich mit einer Einlassbereichsmasse (16) versehen ist und/oder das Messrohr (2) im Einlassbereich mit einem Gehäuse (15) des Coriolis-Massedurchflussmessgeräts (1) fest verbunden ist.

9. Coriolis-Massedurchflussmessgerät (1) nach einem der Ansprüche 1 bis 8, **dadurch gekennzeichnet, dass** das Messrohr (2) im Auslassbereich mit einer Auslassbereichsmasse (17) versehen ist und/oder das Messrohr (2) im Auslassbereich mit einem Gehäuse (15) des Coriolis-Massedurchflussmessgeräts (1) fest verbunden ist.

10. Coriolis-Massedurchflussmessgerät (1) nach Anspruch 8 oder 9, **dadurch gekennzeichnet, dass** ein einlassseitiges Ende des Übergangsbereichs (9) des Messrohrs (2) ebenfalls mit der Einlassbereichsmasse (16) oder mit dem Gehäuse (15) des Coriolis-Massedurchflussmessgeräts (1) verbunden ist und/oder ein auslassseitiges Ende des Übergangsbereichs (9) des Messrohrs (2) ebenfalls mit der Auslassbereichsmasse (17) oder mit dem Gehäuse (15) des Coriolis-Massedurchflussmessgeräts (1) verbunden ist.

11. Coriolis-Massedurchflussmessgerät (1) nach einem der Ansprüche 1 bis 10, **dadurch gekennzeichnet, dass** der schwingfähige Bereich (10) der ersten Windung (7) und der schwingfähige Bereich (11) der zweiten Windung (8) durch wenigstens zwei erste Knotenplatten (18a, 18b) begrenzt wird, die an den beiden beabstandeten Enden der V-Schenkel (12, 13) des Messrohrs (2) angeordnet sind, insbesondere wobei die ersten Knotenplatten (18a, 18b) die erste Windung (7) und die zweite Windung (8) miteinander verbinden.

12. Coriolis-Massedurchflussmessgerät (1) nach Anspruch 11, **dadurch gekennzeichnet, dass** zwei zweite Knotenplatten (19a, 19b) an dem Messrohr (2) befestigt sind, eine zweite Knotenplatte (19a) zwischen dem Einlassende (5) des Messrohrs (2) und der dem Einlassende (5) nahen ersten .Knotenplatte (18a), eine weitere zweite Knotenplatte (19b) zwischen dem Auslassende (6) des Messrohrs (2) und der dem Auslassende (6) des Messrohrs (2) nahen ersten Knotenplatte (18b), insbesondere wobei die zweiten Knotenplatten (18a, 18b) die erste Windung (7) und die zweite Windung (8) miteinander verbinden.

13. Coriolis-Massedurchflussmessgerät (1) nach einem der Ansprüche 1 bis 12, **dadurch gekennzeichnet, dass** die erste Windung (7) und die zweite Windung (8) einen maximalen Windungsdurchmesser von unter 15 cm aufweist, bevorzugt von unter 10 cm aufweist.

14. Coriolis-Massedurchflussmessgerät (1) nach einem der Ansprüche 1 bis 13, **dadurch gekennzeichnet, dass** das Messrohr (2) einen maximalen Innendurchmesser von 2 mm aufweist, insbesondere einen maximalen Innendurchmesser von 1,2 mm aufweist und/oder das Messrohr (2) eine maximale Wandstärke 0,3 mm aufweist, insbesondere das Messrohr (2) eine maximale Wandstärke 0,2 mm aufweist.

## Claims

1. Coriolis mass flowmeter (1) with a measuring tube (2) that can have a medium flowing through it, with at least one actuator (3) and with at least one sensor (4a, 4b), wherein the measuring tube (2) is bent between its input end (5) and its output end (6) into a first winding (7) and a second winding (8), the first winding (7) and the second winding (8) merging into one another at a transitional section (9) of the measuring tube (2), the first winding (7) and the second winding (8) running in parallel winding planes and being opposite one another, wherein the first winding (7) and the second winding (8) can be excited to oscillation in oscillating sections (10, 11) by the actuator (3) and the oscillations can be detected by the sensor (4a, 4b), and wherein the oscillating sections (10, 11) of the first winding and of the second winding (8) are bent into a V shape,
**characterized in**
**that** the oscillation sections (10, 11) of the first winding (7) and the second winding (8) are each open in the direction of the transitional section (9) of the measuring tube (2).

2. Coriolis mass flowmeter (1) according to claim 1, **characterized in that** the transitional section (9) of the measuring tube (2) is located in a base plane, in particular the transitional section (9), the input end (5) and the output end (6) of the measuring tube (2) are located in a base plane.

3. Coriolis mass flowmeter (1) according to claim 2, **characterized in that** the winding planes are perpendicular to the base plane.

4. Coriolis mass flowmeter (1) according to claim 2 or 3, **characterized in that** the legs (12, 13) of the V-shaped, bent oscillating section (10) of the first winding (7) and/or the second winding (8) comprise an angle identical to the base plane, in particular each leg (12, 13) of the V-shaped, bent oscillating sections (10, 11) of the first winding (7) and the second winding (8) comprises an angle identical to the base plane.

5. Coriolis mass flowmeter (1) according to any one of claims 1 to 4, **characterized in that** the actuator (3) is joined to the section of the first winding (7) and the second winding (8), to which the legs (12, 13) of each V-shaped, bent oscillating sections (10, 11) come together.

6. Coriolis mass flowmeter (1) according to any one of claims 1 to 5, **characterized in that** the transitional section (9) of the measuring tube (2) is designed with an S shape, in particular the base plane is designed in an S shape.

7. Coriolis mass flowmeter (1) according to any one of claims 1 to 6, **characterized in that** the measuring tube (2) is provided with a central mass (14) in the transitional section (9) and/or the measuring tube (2) is permanently attached to a housing (15) of the Coriolis mass flowmeter (1) in the transitional section (9).

8. Coriolis mass flowmeter (1) according to any one of claims 1 to 7, **characterized in that** the measuring tube (2) is provided with an input section mass (16) in the input section and/or the measuring tube (2) is permanently attached to a housing (15) of the Coriolis mass flowmeter (1) in the input section.

9. Coriolis mass flowmeter (1) according to any one of claims 1 to 8, **characterized in that** the measuring tube (2) is provided with an output section mass (17) in the output section and/or the measuring tube (2) is permanently attached to a housing (15) of the Coriolis mass flowmeter (1) in the output section.

10. Coriolis mass flowmeter (1) according to claim 8 or 9, **characterized in that** an input side end of the transitional section (9) of the measuring tube (2) is also attached to the input section mass (16) or the housing (15) of the Coriolis mass flowmeter (1) and/or an output side end of the transitional section (9) of the measuring tube (2) is also attached to the output section mass (17) or to the housing (15) of the Coriolis mass flowmeter (1).

11. Coriolis mass flowmeter (1) according to any one of claims 1 to 10, **characterized in that** the oscillating section (10) of the first winding (7) and the oscillating section (11) of the second winding (8) are limited by at least two first node plates (18a, 18b), which are arranged on both spaced ends of the V legs (12, 13) of the measuring tube (2), in particular wherein the first node plates (18a, 18b) join the first winding (7) and the second winding (8) to one another.

12. Coriolis mass flowmeter (1) according to claim 11, **characterized in that** two second node plates (19a, 19b) are attached to the measuring tube (2) - a second node plate (19a) between the input end (5) of the measuring tube (2) and the first node plate (18a) close to the input end (5), a further second node plate (19b) between the output end (6) of the measuring tube (2) and the first node plate (18b) close to the output end (6) -, in particular wherein the second node plates (19a, 19b) join the first winding (7) and the second winding (8) to one another.

13. Coriolis mass flowmeter (1) according to any one of claims 1 to 12, **characterized in that** the first winding (7) and the second winding (8) have a maximum winding diameter of less than 15 cm, preferably of less than 10 cm.

14. Coriolis mass flowmeter (1) according to any one of claims 1 to 13, **characterized in that** the measuring tube (2) has a maximum inner diameter of 2 mm, in particular a maximum inner diameter of 1.2 mm and/or the measuring tube (2) has a maximum wall thickness of 0.3 mm, in particular the measuring tube (2) has a maximum wall thickness of 0.2 mm.

## Revendications

1. Débitmètre massique de Coriolis (1) comprenant un tube de mesure (2) pouvant être parcouru par un fluide, comprenant au moins un actionneur (3) et au moins un capteur (4a, 4b), le tube de mesure (2) étant cintré entre son extrémité d'entrée (5) et son extrémité de sortie (6) pour former un premier enroulement (7) et un deuxième enroulement (8), le premier enroulement (7) et le deuxième enroulement (8) se prolongeant l'un dans l'autre dans une région de transition (9) du tube de mesure (2), le premier enroulement (7) et le deuxième enroulement (8) s'étendant dans des plans d'enroulement parallèles et étant opposés l'un à l'autre, le premier enroulement (7) et le deuxième enroulement (8) pouvant être amenés à osciller par l'actionneur (3) dans des zones pouvant osciller (10, 11) et les oscillations pouvant être détectées par le capteur (4a, 4b), et les régions pouvant osciller (10, 11) du premier enroulement (7) et du deuxième enroulement (8) étant cintrées en forme de V,
**caractérisé en ce que**
les régions pouvant osciller (10, 11) du premier enroulement (7) et du deuxième enroulement (8) s'ouvrent à chaque fois dans la direction de la région de transition (9) du tube de mesure (2).

2. Débitmètre massique de Coriolis (1) selon la revendication 1, **caractérisé en ce que** la région de transition (9) du tube de mesure (2) est située dans un plan de base, en particulier la zone de transition (9), l'extrémité d'entrée (5) et l'extrémité de sortie (6) du tube de mesure (2) sont situées dans un plan de base.

3. Débitmètre massique de Coriolis selon la revendication 2, **caractérisé en ce que** les plans d'enroulement sont perpendiculaires au plan de base.

4. Débitmètre massique de Coriolis (1) selon la revendication 2 ou 3, **caractérisé en ce que** les branches (12, 13) de la région pouvant osciller cintrée en forme de V (10) du premier enroulement (7) et/ou du deuxième enroulement (8) forment des angles identiques avec le plan de base, en particulier chaque branche (12, 13) des régions pouvant osciller cintrées en forme de V (10, 11) du premier enroulement (7) et du deuxième enroulement (8) forme un angle identique avec le plan de base.

5. Débitmètre massique de Coriolis (1) selon l'une quelconque des revendications 1 à 4, **caractérisé en ce que** l'actionneur (3) est connecté à la région du premier enroulement (7) et du deuxième enroulement (8) dans laquelle les branches (12, 13) des régions respectives pouvant osciller cintrées en forme de V (10, 11) coïncident.

6. Débitmètre massique de Coriolis (1) selon l'une quelconque des revendications 1 à 5, **caractérisé en ce que** la région de transition (9) du tube de mesure (2) est configurée en forme de S, en particulier est configurée en forme de S dans le plan de base.

7. Débitmètre massique de Coriolis (1) selon l'une quelconque des revendications 1 à 6, **caractérisé en ce que** le tube de mesure (2) est pourvu dans la région de transition (9) d'une masse centrale (14) et/ou le tube de mesure (2) est connecté fixement dans la région de transition (9) à un boîtier (15) du débitmètre massique de Coriolis (1).

8. Débitmètre massique de Coriolis (1) selon l'une quelconque des revendications 1 à 7, **caractérisé en ce que** le tube de mesure (2) est pourvu dans la région d'entrée d'une masse de région d'entrée (16) et/ou le tube de mesure (2) est connecté fixement dans la région d'entrée à un boîtier (15) du débitmètre massique de Coriolis (1).

9. Débitmètre massique de Coriolis (1) selon l'une quelconque des revendications 1 à 8, **caractérisé en ce que** le tube de mesure (2) est pourvu dans la région de sortie d'une masse de région de sortie (17) et/ou le tube de mesure (2) est connecté fixement dans la région de sortie à un boîtier (15) du débitmètre massique de Coriolis (1).

10. Débitmètre massique de Coriolis (1) selon la revendication 8 ou 9, **caractérisé en ce qu'**une extrémité du côté de l'entrée de la région de transition (9) du tube de mesure (2) est également connectée à la masse de région d'entrée (16) ou au boîtier (15) du débitmètre massique de Coriolis (1) et/ou une extrémité du côté de la sortie de la région de transition (9) du tube de mesure (2) est également connectée à la masse de région de sortie (17) ou au boîtier (15) du débitmètre massique de Coriolis (1).

11. Débitmètre massique de Coriolis (1) selon l'une quelconque des revendications 1 à 10, **caractérisé en ce que** la région pouvant osciller (10) du premier enroulement (7) et la région pouvant osciller (11) du deuxième enroulement (8) sont limitées par au moins deux premières plaques d'encoignure (18a, 18b), qui sont disposées au niveau des deux extrémités espacées des branches du V (12, 13) du tube de mesure (2), en particulier les premières plaques d'encoignure (18a, 18b) reliant entre eux le premier enroulement (7) et le deuxième enroulement (8).

12. Débitmètre massique de Coriolis (1) selon la revendication 11, **caractérisé en ce que** deux deuxièmes plaques d'encoignure (19a, 19b) sont fixées au tube de mesure (2), une deuxième plaque d'encoignure (19a) entre l'extrémité d'entrée (5) du tube de mesure (2) et la première plaque d'encoignure (18a) à proximité de l'extrémité d'entrée (5), une deuxième plaque d'encoignure supplémentaire (19b) entre l'extrémité de sortie (6) du tube de mesure (2) et la première plaque d'encoignure (18b) proche de l'extrémité de sortie (6) du tube de mesure (2), en particulier les deux plaques d'encoignure (18a, 18b) reliant entre eux le premier enroulement (7) et le deuxième enroulement (8).

13. Débitmètre massique de Coriolis (1) selon l'une quelconque des revendications 1 à 12, **caractérisé en ce que** le premier enroulement (7) et le deuxième enroulement (8) présentent un diamètre d'enroulement maximal inférieur à 15 cm, de préférence inférieur à 10 cm.

14. Débitmètre massique de Coriolis (1) selon l'une quelconque des revendications 1 à 13, **caractérisé en ce que** le tube de mesure (2) présente un diamètre intérieur maximal de 2 mm, en particulier un diamètre intérieur maximal de 1,2 mm et/ou le tube de mesure (2) présente une épaisseur de paroi maximale de 0,3 mm, en particulier le tube de mesure (2) présente une épaisseur de paroi maximale de 0,2 mm.
